# EUROPEAN PATENT APPLICATION

(11) **EP 3 342 577 A1**
(43) Date of publication of application: **04.07.2018**
(21) Application number: 17150078.8
(22) Date of filing: 02.01.2017
(51) Int. Cl.: B29C 45/37, B29C 33/42, B08B 17/06

(54) **A PLASTIC PIECE WITH PROTECTION AGAINST BACTERIA AND MICROORGANISM GROWING IN A LIQUID ENVIRONMENT CONTAINING WATER**

(71) Applicant: Taurus Research and Development S.L.U., 25790 Oliana (ES)
(72) Inventor: TRENCH ROCA, Lluís, 08650 Sallent (ES)
(74) Representative: Juncosa Miro, Jaime

(57) **Abstract**

It is disclosed a plastic piece (1) including a surface with a treatment against bacteria and microorganism growing, wherein said treatment includes a micro or nanopattern texture of the surface obtained by an injection molding treatment of the plastic piece in a mold (10) including a micro or nanopattern recessed texture, wherein the micro or nanopattern texture allows a demolding of the plastic piece (1) from the mold (10). Also, it is disclosed a method for manufacturing a plastic piece (1) having protection against bacteria and microorganism growing in a liquid environment.

## Description

### Field of the Invention

The present invention generally relates to a piece used in an environment containing bacteria and microorganisms growing in water. More in detail, the present invention relates to a plastic piece with protection against bacteria and microorganism and to a method for manufacturing thereof.

### Background of the Invention

The demand of pieces with protection against bacteria and microorganism is growing in the field of medical devices, home appliances, cooking utensils, storage, waterproof surfaces, industrial manufacturing processes, laboratory equipment, waterproof clothing, and in the medical field.

A piece with anti-bacterial property is meant to protect the surface of the piece from the accumulation and growth of bacteria, microorganisms and, in general, dirt.

For example, water is a natural carrier of bacteria, micro-organisms and dirt. Anti-bacteria applications help avoiding the contamination of devices used for the diet and generally related to human health.

According to another example, water may degrade the properties of a surface in its liquid state or in its solid state, i.e. ice. Waterproof applications help avoid the moisten, soften and generally degrading of a large amount of materials exposed to an environment containing water. Moreover, de-icing applications, such as for example de-icing applications in vehicles (e.g. airplanes wings or cars windshields), help avoid the formation of ice on surfaces exposed to water or forming ice.

The prior art discloses pieces with anti-bacteria property for plastic components used for anti-bacteria application in the diet and in particular related to cooking devices. More in detail, the prior art provides coatings suitable to avoid the accumulation of bacterial, and/or to easily remove bacteria from the surface of a piece of a cooking device.

JPH1128165 discloses a plastic molded piece used in a bottle base for mixers processing fresh vegetables, fruits, etc. The plastic piece is molded with an inorganic antibacterial agent. Typical plastics used can be PE (i.e. Polyethylene), PP (i.e. Polypropylene), PS (i.e. Polystyrene) or ABS (i.e. Acrylonitrile butadiene styrene). Antibacterial agents are used in different quantities according to the plastic material used, for example, when it is used PE plastic materials, preferably 30% by weight is an inorganic antimicrobial agent, 10% when using PP plastic materials, 20% when using PS plastic materials, and 20% when using ABS plastic materials. Also it is disclosed an inorganic antimicrobial agent known with the trade name Bakutekira.

US2004010901 discloses a method for manufacturing a plastic substrate with anti-bacteria effect. The substrate comprises multiple layers, a lower anti-bacteria layer, a middle supporting layer, a printing film layer and a top transparent protecting layer.

JP2009067849 discloses an antimicrobial coating film with good mechanical strength, and surface smoothness used for coating at least portions of cooking devices, as for example a cooking vessel for an inner pot for a rice cooker. The coating film provides anti-bacterial and water repelling properties. The antimicrobial coating film is obtained by dispersing metal particles of the size of 100 nm or less, into a film composed of a large number of resin particles.

Prior art water repelling and anti-bacteria pieces as disclosed above, are obtained by including anti-bacterial agents in the composition of the material, or by providing an outer layer with anti-bacterial agents.

In the first case, the whole part includes antibacterial agents, resulting in a waste of anti-bacterial product since the inner volume of a part is not in contact with the environment.

In the second case, the part comprises an outer layer with anti-bacterial agents. Such anti-bacterial agents layers are expensive and the process required to apply the layer to the part is time and resources consuming.

For this reason, it has been necessary to introduce pieces with an anti-bacterial and hydrophobic surface, without using a dispersion of agents in the composition of the material, or by providing an outer layer with a dispersion of agents to be adhered to the piece.

The prior art also discloses a metal piece with high hydrophobic property. According to the paper "Multifunctional surfaces produced by femtosecond laser pulses" published in the "Journal of Applied Physics" by A.Y. Vorobyev and Chunlei Guo, a high hydrophobic metal piece can be obtained by laser-etching the surface of the piece with an etched pattern with hydrophobic property.

The etched pattern produced on the surface of the metal piece presents very thin engravings and reliefs, dimensionally in the range of the nanometers or micrometers. A drop of water contacting the hydrophobic surface of the laser-etched piece as disclosed above, is completely repelled and bounces away, with 30% of the droplet kinetic energy conserved.

In order to create the etched pattern, prior art teaches etching the piece surface with laser pulses of the duration of about a quadrillionth of a second and of very high intensity.

However, prior art laser-etching technique to be implemented at an industrial level presents many drawbacks.

First, laser-etching process is a long process. It currently takes about one hour to pattern one inch square metal surface. Since the rapidity of the process is very low, the more extensive is the surface to be etched, the more time is required to perform the process.

Second, laser-etching process is an expensive process. For this reason, it is difficult or at least not very profitable, inserting a laser-etching process in the manufacturing process of a large amount of pieces in an industrial production chain.

Third, laser-etching process is restricted to a limited group of materials. In fact, the process has been performed on metal materials, while the application of laser-etching process to other materials commonly used in any industrial application such as plastics, is not known or is applicable with even increased time and costs of the process.

Aim of the present invention is to provide a plastic piece with protection against bacteria and microorganism and a method for manufacturing thereof that overcome the drawbacks of the prior art.

More in detail, aim of the present invention is to provide a plastic piece with protection against bacteria and microorganism that is easy to be cleaned.

Another aim of the present invention is to provide a plastic piece with protection against bacteria and microorganism that is easy to be dried.

Still another aim of the present invention is to provide a plastic piece with protection against bacteria and microorganism with reduced time and costs of the manufacturing process thereof.

### Description of the Invention

These and other aims, features and advantages according to the present invention are provided by a plastic piece according to independent claim 1 and its dependent claims.

Also object of the present invention is a method for manufacturing plastic pieces according to independent claim 11 and its dependent claims.

The plastic piece of this invention with protection against bacteria and microorganism growing in a liquid environment containing water includes at least a surface with a treatment against bacteria and microorganism growing, wherein:
- the treatment of said at least a surface of the plastic piece comprises a micro or nanopattern texture of the surface providing a hydrophobic property; and
- the micro or nanopattern texture is obtained by an injection molding treatment of the plastic piece in a mold including a micro or nanopattern recessed texture;
wherein said micro or nanopattern texture allows a demolding of the plastic piece from the mold.

Then, the plastic piece with protection against bacteria and microorganism growing is suitable to be used in any environment containing water.

Advantageously, after the use, the plastic piece is suitable to be cleaned very easily because of two main reasons. First, the amount of dirt collected on the surface of the piece is very low, due to the fact that bacteria, microorganisms and dirt carried by water during the use of the piece is repelled by the hydrophobic property of the plastic piece surface. Second, during the clean treatment, the water can flow on the surface of the plastic piece very rapidly, leaving substantially no trace of water.

Advantageously, during the cleaning treatment, the drying step is very quick because, as said before, the hydrophobic property of the plastic piece surface repels water, leaving substantially no trace of water.

Advantageously, the plastic piece is obtained without substantially altering a traditional injection molding treatment. For this reason, the production of plastic pieces with a high hydrophobic property is obtained without increasing the time and costs of a traditional injection molding treatment.

According to another aspect of the present invention, the plastic piece surface can present a regular pattern profile. In other words, the plastic piece surface can present a pattern which protrusions and recesses having an equal distribution (i.e. spacing between consecutive protrusions and/or spacing between consecutive recesses) and equal dimensions (i.e. depth of protrusions and/or recesses and width of protrusions and/or recesses).

According to another aspect of the present invention, the plastic piece surface presents an irregular pattern profile, i.e. a pattern profile obtained by a different depth of the etching (i.e. protrusions and/or recesses) or by a different draw of the pattern (i.e. width, spacing of protrusions and/or recesses). In other words, the plastic piece surface can present a pattern which protrusions and recesses that can have an inhomogeneous distribution and dimensions.

Advantageously, different properties of the surface of the plastic piece can be obtained by a different depth of the etching or by a different draw of the pattern.

Depending on the depth of the etching and by a different draw of the pattern, different colors of the plastic piece surface can be obtained. In fact, the color of the plastic piece surface depends on the plastic mold pressure within each micro or nanopattern during the injection molding process. By changing the pattern regularity, a different plastic mold pressure is required during the injection molding process and so, a different color of the plastic piece surface can be obtained. By maintaining the same pattern regularity, a unique color of the plastic piece surface can be obtained.

According to another aspect of the present invention, the micro or nanopattern is a protruding pattern of the surface of said piece. In other words, the micro or nanopattern profile comprises protruding portions and recess portions. Such protruding and recess portions are not visible to the naked eye and are not tactile perceivable.

According to another aspect of the present invention, the hydrophobic micro or nanopattern is provided on at least a flat area or at least a generally curved area of the surface of the piece. In other words, it is possible to provide the hydrophobic micro or nanopattern on a flat or curved portion of the piece.

Advantageously, it is possible to provide a portion of the piece with hydrophobic property and another portion of the piece without the hydrophobic property.

According to another aspect of the present invention, the hydrophobic micro or nanopattern is provided on the entire surface of the piece.

Advantageously, it is possible to provide with hydrophobic micro or nanopattern flat surfaces or surfaces with more complex shape, in other words surfaces generally developing in the 3D space.

The method for manufacturing plastic pieces according to the present invention comprises the steps of:
- providing a mold having a cavity with at least a molding surface including a micro or nanopattern recessed texture entering (i.e. penetrating) the molding surface, wherein said micro or nanopattern texture of the molding surface is produced by a 3D-laser etching treatment;
- obtaining the plastic piece by an injection molding step using the cited mold;
- executing the plastic piece demolding and delivering the plastic piece;
wherein the size and shape of said recessed micro or nanopattern texture allows said demolding step of the plastic piece from a mold, and wherein the high hydrophobic property of the plastic piece and then a protection against bacteria and microorganism is achieved by said micro or nanopattern texture that is incorporated in at least a surface of the plastic piece after the molding step.

According to an aspect of the present invention, the 3D-laser etching treatment is provided for the inner walls of the mold. In other words, the micro or nanopattern texture is entering the mold cavity. For this reason, the 3D-laser etching treatment is executed only once, i.e. for the mold. Once the mold presents the micro or nanopattern desired, there is no need to use the 3D-laser etching on the plurality of pieces that will be produced with said mold, by injection molding treatment.

Advantageously, the 3D-laser etching treatment executed on the mold instead of on the plurality of pieces as described in the prior art, results in determinant time and cost savings in a production chain process.

Moreover, the pieces produced according to the present invention are produced by traditional injection molding process, without altering the time and costs related to this already known process.

According to another aspect of the present invention, the micro or nanopattern provided presents a geometry (size and shape) that allows the plastic piece demolding according to the traditional injection molding process. In other words, the pattern comprises protrusions and recesses which geometry allows the piece to be extracted from the mold, once the piece has been obtained in the mold.

In order to allow the piece demolding, the micro or nanopattern provided on the mold presents a positive mold angle. In other words, the geometry of the protrusions and recesses of the pattern in the mold does not present an impediment for the extraction of the piece from the mold. For example, the geometry of the pattern of the mold presents recesses that increases their width along the direction of the extraction of the piece (i.e. a direction perpendicular to the molding surface of the mold and pointing outwardly), and protrusions that decreases their width along the direction of the extraction of the piece.

### Brief Description of the Drawings

These and various other features and aspects of the present invention will be readily understood with reference to the following detailed description taken in conjunction with the accompanying drawings, in which like or similar numbers are used throughout, and in which:
- Figure 1 shows the 3D-laser etching treatment step of the cavity of a mold of the method for manufacturing plastic pieces having a high hydrophobic property according to the present invention;
- Figure 2 shows the 3D-laser etched mold according to the present invention;
- Figures 2a-c shows the section view enlarged detail of three exemplary micro or nanopattern textures of the inner surface of the mold shown in figure 2;
- Figure 3 shows the injection molding step of the method for manufacturing plastic pieces having a high hydrophobic property according to the present invention;
- Figure 4 shows the demolding step of the method for manufacturing plastic pieces having a high hydrophobic property according to the present invention;
- Figure 5 shows a plastic piece having a high hydrophobic property according to the present invention;
- Figures 5a-c shows the section view detail of three exemplary micro or nanopattern protruding textures of the surface of the plastic piece of figure 5.

### Detailed Description of several Embodiments

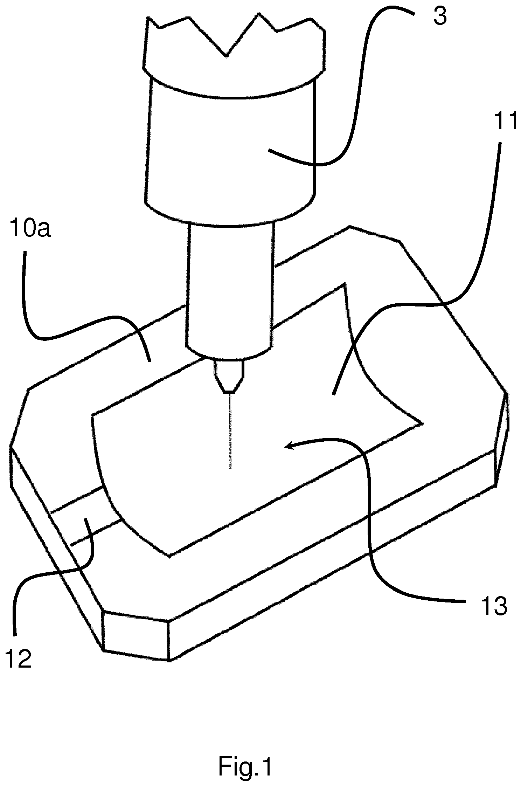

As shown in the attached figures 1-5, the present invention provides a plastic piece 1 with high hydrophobic property obtained by injection molding treatment.

The plastic piece 1 is intended for the use in a vessel, receptacle or tank, a lid for a vessel or tank, a cutting or stirring member, a support or support base for a liquid dispensing machine, so that the hydrophobic property of the at least a surface of the plastic piece contributes to avoid inclusion or hold of any liquid containing water in the at least a surface, and then provides a protection against bacteria and microorganism.

The method for manufacturing plastic pieces according to the present invention comprises the step of providing a mold 10 for manufacturing the plastic piece 1 by injection molding, said mold 10 comprising a first portion 10a and a second portion 10b engageable with the first portion 10a. The mold 10 presents a cavity 13 that represents the volume in which the molten plastic is inserted during the injection molding treatment.

The mold cavity 13 is delimited by a molding surface 11. In other words, each portion 10a, 10b of the mold 10 comprises a molding surface 11 which represents the negative of the surface 2 of the plastic piece 1 that is obtained by injection molding treatment. The mold 10 also presents an injection channel 12 for inserting the plastic in the molten state within the mold 10.

Figure 1 is an exemplary representation of the 3D-laser etching treatment of the manufacturing method according to the present invention. According to the present invention, the 3D-laser device 3 etches the molding surface 11 of the mold 10.

The etching treatment can be provided to the entire molding surface 11, or to a portion or portions of the molding surface 11. According to a first embodiment, if the entire molding surface 11 is etched by the 3D-laser device 3, the plastic piece 1 that is obtained by the injection molding process, can present the entire surface 2 with a pattern profile. According to another embodiment, if one portions or a plurality of portions of the molding surface 11 is etched by the 3D-laser device 3, the corresponding portion or plurality of portions on the surface 2 of the plastic piece 1 can present a pattern profile.

In general, the profile of the molding surface 11 represent the negative of the profile of the plastic piece 1 obtained by injection molding. In other words, the molding surface 11 is complementary to the surface 2 of the plastic piece 1.

The 3D-laser etching treatment is performed by a 3D-laser device 3 as known by prior art, such as an ultra-short pulses femto-laser machining capable to produce in the surface of the mold cold laser ablation and recesses or holes of a diameter for example down to 30 µm. The mold 10 is usually made of a metallic material or a material that can resist to the high temperatures of the plastic in the molten state, when the plastic is introduced in the mold 10 during the injection molding treatment.

3D-laser etching on a molding surface 11 of a mold 10 is performed according to the present invention in such a way that the pattern profile obtained on the molding surface 11 is a nano or micropattern profile. In other words, the profile obtained on the molding surface 11 of the mold 10 is a profile which characteristics elements, e.g. its protrusions and/or recesses, are dimensionally in the range of the nanometers or micrometers. According to a preferred embodiment of the present invention, the dimension of the characteristic elements of the pattern profile of the molding surface 11, is in the range of the nanometers. According to another embodiment of the present invention, the dimension of the characteristic elements of the pattern profile of the molding surface 11, is in the range of the micrometers. Characteristic elements in the dimension range of nanometers provide enhanced hydrophobic property of the surface 2 of the plastic piece 1 obtained by injection molding. Characteristic elements in the dimension range of micrometers allows to perform a 3D-laser etching that requires a simpler instrumentation, i.e. 3D-laser device 3, with reduced time and costs.

According to another aspect of the 3D-laser etching treatment of the present invention, the duration of the positioning of the laser ray on the same point of the molding surface 11 of the mold 10, is preferably in the range of the femtoseconds.

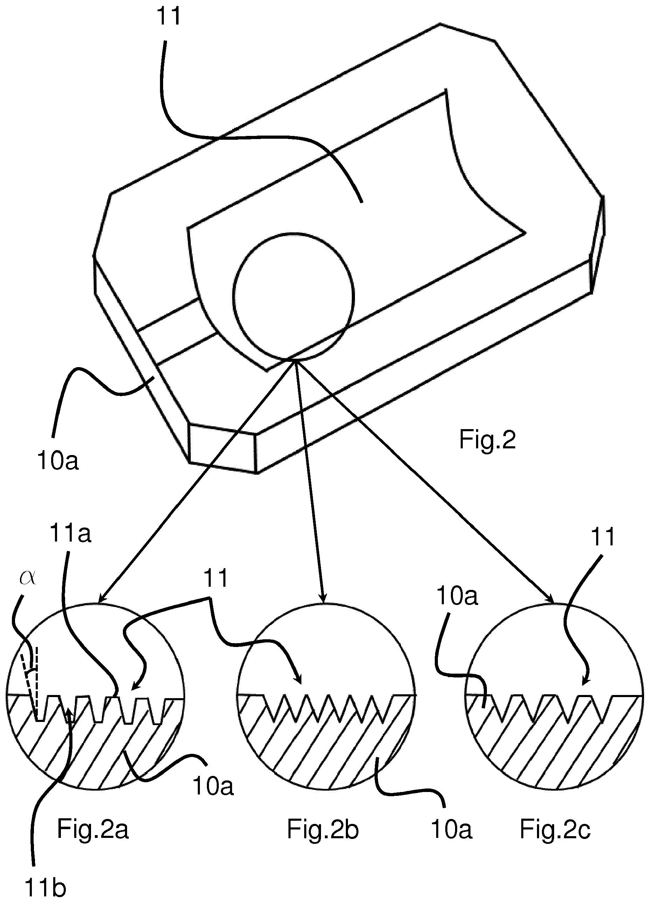

Once the step of 3D-laser etching has been performed, at least a portion 10a, 10b, of the mold 10 presents an etched molding surface 11, as represented in figure 2.

The profile of the pattern of the molding surface 11 comprises protrusions 11 a and recesses 11 b as shown in detail in figures 2a-c.

Protrusions 11 a and recesses 11 b can present different sizes, shapes and dimensions. More in detail, the shape and dimension of the protrusions and recesses define the geometry of the pattern profile of the molding surface 11, and consequentially, the pattern profile on the surface 2 of the plastic piece that is obtained by injection molding.

According to an embodiment of the present invention, as shown for example in figure 2a, 2c, protrusions 11 a can present a flat area on the top, i.e. on the outward portion of the molding surface 11.

According to another embodiment of the present invention, as shown for example in figure 2b, protrusions 11 a can present a pointing extremity, i.e. the outward portion of the protrusions ends with a point instead of a flat area.

According to an embodiment of the present invention, as shown for example in figure 2a, recesses 11 b can present a flat area on the bottom, i.e. on the inward portion of the molding surface 11.

According to another embodiment of the present invention, as shown for example in figure 2b, 2c recesses 11 b can present a pointing extremity, i.e. the inward portion of the protrusions ends with a point instead of a flat area.

In general, pointing extremities of the protrusions and/or of the recesses and the relative help reducing the accumulation of dirt, bacteria and microorganism on the surface 2 of the plastic piece 1 obtained by injection molding.

The common characteristic of the pattern profile of the molding surface 11 obtained by 3D-laser etching as per the present invention and shown in figures 2a-c, is the positive molding angle α.

As shown for example in figure 2a, the pattern profile of the molding surface 11 is designed to allow the extraction of the plastic piece 1 once it is obtained during the injection molding treatment. The extraction of the piece is possible when the molding angle α is positive. The molding angle α is the angle formed between the direction of the extraction of the piece, i.e. the direction substantially perpendicular the plane of the molding surface 11, and the lateral wall of the mold, or the lateral portion of each protruding element 11 a of the molding surface 11. A molding angle α is positive when the direction of a lateral wall of the mold or of a lateral portion of a protruding element 11 a of the molding surface 11 is so that the angle α is an empty region, i.e. a region not occupied by the wall or the protrusion. A molding angle α is negative when the direction of a lateral wall of the mold or of a lateral portion of a protruding element 11 a of the molding surface 11 is so that the angle α is a solid region, i.e. a region occupied by the wall or the protrusion.

In an embodiment of the present invention, shown in figures 2a-c, the molding surface 11 can present a regular pattern profile. In other words, the plastic piece surface can present a pattern with protrusions 11 a and recesses 11 b that can have an equal distribution (i.e. spacing between consecutive protrusions and/or spacing between consecutive recesses) and equal dimensions (i.e. depth of protrusions and/or recesses and width of protrusions and/or recesses).

In another embodiment not shown in the attached figures, the molding surface 11 presents a pattern profile obtained by a different depth of the etching (i.e. protrusions and/or recesses) or by a different draw of the pattern (i.e. width, spacing of protrusions and/or recesses). In other words, the molding surface 11 of the mold 10, can present a pattern with protrusions 11 a and recesses 11 b that can have an inhomogeneous distribution and dimensions.

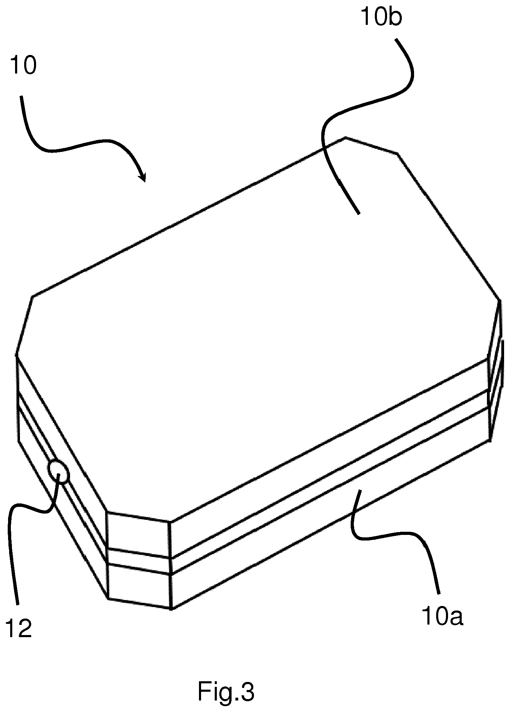

Figure 3 shows a representation of the step of the injection molding treatment of the manufacturing method according to the present invention.

More in detail, the two portions 10a, 10b of the mold 10 are assembled together and the molten plastic is inserted inside the mold 10 by the injection channel 12.

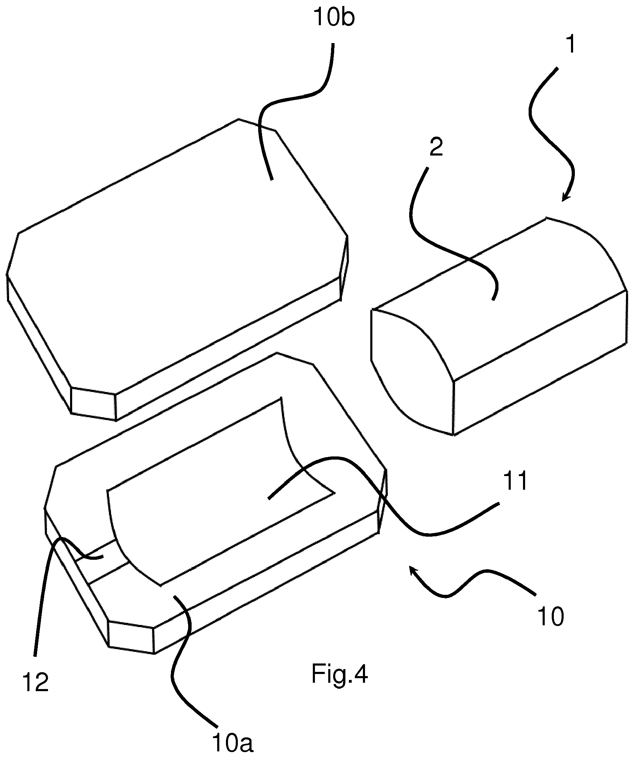

Figure 4 shows a representation of the step of demolding the plastic piece 1 from the mold 10 of the manufacturing method according to the present invention.

The two portions 10a, 10b of the mold 10 are separated and the plastic piece 1 is extracted from the mold 10. More in detail, the separation of the mold portions 10a, 10b is executed along a direction perpendicular to the plane of the mold 10.

Once the two portions 10a, 10b of the mold 10 are separated, the plastic piece 1 is delivered.

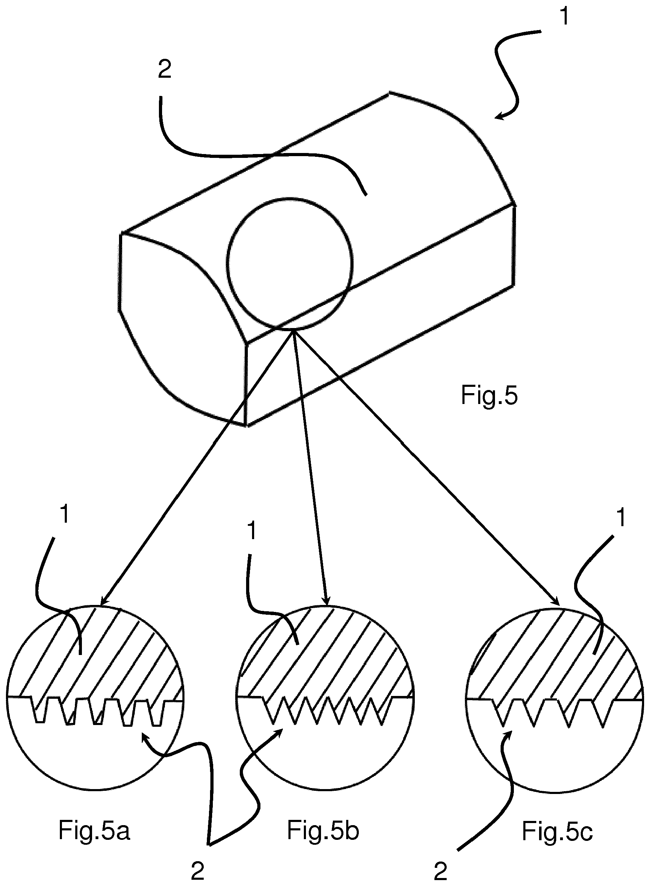

Figure 5 shows in greater detail the plastic piece 1 obtained by the injection molding treatment as exposed above.

The plastic piece 1 can be a generic piece of plastic suitable for several uses. For example the plastic piece 1 can be a component of a cooking device or home appliances in contact with an environment containing water or foodstuff mainly containing water.

According to an embodiment not shown in the attached figures, the plastic piece 1 can be a cover article or an inner lining of a pan or another similar cooking device.

For example, the plastic piece 1 can present projections and/or ribs that in a traditional embodiment are difficult to be cleaned. As per the present invention, the plastic piece 1, obtained by injection molding, has hydrophobic and anti-bacterial property and is especially indicated for the components of an inner lining of a cooking device that presents projections or ribs or other components that are difficult to be cleaned.

Figures 5a-c show a detail of the surface 2 of the plastic piece 1. As said before, the pattern profile of the surface 2 of the piece 1 is complementary to the pattern profile of the molding surface 11 of the mold 10. The pattern profile of the molding surface 11 is obtained by 3D-laser etching. The pattern profile of the surface 2 of the plastic piece 1 is obtained by the penetration of the molten plastic in the projections and recesses of the pattern profile of the molding surface 11 during the injection molding treatment.

The pattern profile of the surface 2 of the piece 1 shown in figure 5a is obtained by injection molding when the molding surface 11 is the one shown in figure 2a; the pattern profile of the surface 2 of the piece 1 shown in figure 5b is obtained with the molding surface 11 shown in figure 2b; the pattern profile of the surface 2 of the piece 1 shown in figure 5c is obtained with the molding surface 11 shown in figure 2c.

The pattern profiles shown in figures 5a-c are regular pattern profiles. In other words, the surface 2 of the plastic piece 1 can present a pattern which protrusions and recesses can have an equal distribution (i.e. spacing between consecutive protrusions and/or spacing between consecutive recesses) and equal dimensions (i.e. depth of protrusions and/or recesses and width of protrusions and/or recesses), basing on the distribution and dimensions of the corresponding respectively recesses 11b and protrusions 11 a of the molding surface 11 of the mold 10.

According to other embodiments of the present invention, not shown in the attached figures, the pattern profile of the surface 2 of the plastic piece 1 is an irregular pattern profile, i.e. a pattern profile obtained by a different depth of the etching (i.e. protrusions and/or recesses) or by a different draw of the pattern (i.e. width, spacing of protrusions and/or recesses). In other words, the surface of the plastic piece 1 can present a pattern which protrusions and recesses can have an inhomogeneous distribution and dimensions.

Different properties of the surface 2 of the plastic piece 1 can be obtained by a different depth of the etching or by a different draw of the pattern.

For example, depending on the depth of the etching and by a different draw of the pattern, different colors of the plastic piece surface can be obtained. In fact, the color of the plastic piece surface depends on the plastic mold pressure within each micro or nanopattern during the injection molding process. By changing the pattern regularity, a different plastic mold pressure is required during the injection molding process and so, a different color of the plastic piece surface can be obtained. By maintaining the same pattern regularity, a unique color of the plastic piece surface can be obtained.

According to another example, depending on the depth of the etching and by a different draw of the pattern, different hydrophobic and/or anti-bacterial properties of the surface 2 of the piece 1 can be obtained.

## Claims

1. A plastic piece with protection against bacteria and microorganism growing in a liquid environment containing water, wherein said plastic piece includes at least a surface with a treatment against bacteria and microorganism growing,
**characterized in that**:
- said treatment of said at least a surface (2) of the plastic piece includes a micro or nanopattern texture; and
- said micro or nanopattern texture is obtained by an injection molding treatment of the plastic piece in a mold (10) including a micro or nanopattern recessed texture;
wherein said micro or nanopattern texture allows a demolding of the plastic piece (1) from the mold (10).

2. A plastic piece (1) according to claim 1, wherein the surface (2) of said piece comprises a flat area and/or a generally curved area.

3. A plastic piece (1) according to claim 2, wherein said treatment against bacteria and microorganism growing is provided on at least said flat area and/or at least said generally curved area.

4. A plastic piece (1) according to claim 1, wherein said treatment against bacteria and microorganism growing is provided on the entire surface (2) of said piece.

5. A plastic piece according to any of the previous claims wherein said piece is selected among: a vessel, receptacle or tank, a lid for a vessel or tank, a cutting or stirring member, a support or support base for a liquid dispensing machine, so that the micro or nanopattern texture of said at least a surface (2) of the plastic piece contributes to avoid bacteria growing and/or microorganism colonies hold on said at least a surface within a liquid containing water retained at said at least a surface

6. A plastic piece (1) according to any of the previous claims, wherein said micro or nanopattern is a protruding pattern of the surface (2) of said piece.

7. A plastic piece (1) according to any of the previous claims, wherein said micro or nanopattern presents a regular pattern design.

8. A plastic piece (1) according to any of the previous claims, wherein said micro or nanopattern incudes one or more set of patterns having a different pattern design.

9. A plastic piece (1) according to claim 8, wherein said different pattern design is obtained by a different shape of the texture or by a different draw of the pattern.

10. A plastic piece (1) according to any of the previous claims, wherein said micro or nanopattern provides a uniform color.

11. A method for manufacturing a plastic piece (1) having protection against bacteria and microorganism growing in a liquid environment containing water, wherein said method includes providing to at least a surface of the plastic piece a treatment against bacteria and microorganism growing, **characterized in that** said treatment comprises providing said at least a surface by a micro or nanopattern texture produced by an injection molding process in a mold (10) having a cavity (13) with at least a molding surface (11) including a micro or nanopattern recessed texture entering the molding surface (11), wherein said micro or nanopattern texture of the molding surface is produced by a 3D-laser etching treatment and wherein the size of said micro or nanopattern texture allows a demolding step of the plastic piece (1) from the mold (10).

12. The method according to claim 11, wherein said laser etching treatment is executed using a femto-laser device (3) so that the etching treatment delivering said micro o nanopattern on the mold cavity (13).

13. The method according to claim 11 wherein said cavity (13) includes a flat area receiving the etching treatment.

14. The method according to claim 11 wherein said cavity (13) includes a complex area receiving the etching treatment.
